(19) Europäisches Patentamt

European Patent Office

Office européen des brevets

(11) **EP 1 145 015 B1**

(12) **EUROPÄISCHE PATENTSCHRIFT**

(45) Veröffentlichungstag und Bekanntmachung des Hinweises auf die Patenterteilung:
**06.10.2004   Patentblatt 2004/41**

(21) Anmeldenummer: 00940323.9

(22) Anmeldetag: **06.06.2000**

(51) Int Cl.⁷: $G01P\ 1/00$, $G01P\ 15/13$

(86) Internationale Anmeldenummer:
**PCT/EP2000/005186**

(87) Internationale Veröffentlichungsnummer:
**WO 2001/002868 (11.01.2001 Gazette 2001/02)**

(54) **BESCHLEUNIGUNGSMESSEINRICHTUNG**

ACCELERATION MEASURING DEVICE

ACCELEROMETRE

(84) Benannte Vertragsstaaten:
**DE FR GB**

(30) Priorität: **29.06.1999   DE 19929767**

(43) Veröffentlichungstag der Anmeldung:
**17.10.2001   Patentblatt 2001/42**

(73) Patentinhaber: **LITEF GmbH**
**79115 Freiburg (DE)**

(72) Erfinder: **HANDRICH, Eberhard**
**D-79199 Kirchzarten (DE)**

(74) Vertreter: **Müller - Hoffmann & Partner**
**Patentanwälte,**
**Innere Wiener Strasse 17**
**81667 München (DE)**

(56) Entgegenhaltungen:
**EP-A- 0 338 688          FR-A- 2 714 973**
**US-A- 5 142 921          US-A- 5 440 939**
**US-A- 5 473 946          US-A- 5 600 066**

Bemerkungen:
Derzeit sind die WIPO-Publikationsdaten A3 nicht verfügbar.

**Beschreibung**

Die Erfindung betrifft eine Beschleunigungsmeßeinrichtung mit mikromechanischem Pendel, kapazitivem Abgriff und einem durch elektrostatische Kräfte rückstellenden Regelkreis, der in sequentieller Zeitfolge eine rückstellende Spannung zwischen dem Pendel und einer ersten bzw. einer zweiten Elektrode anlegt, die relativ zum Pendel feststehend und in einem jeweils festgelegten Abstand auf gegenüberliegende Flächen des Pendels ausgerichtet angeordnet sind, wobei der Regelkreis als Stellgröße die über das Pendel fließende Differenzladung erfaßt.

Als Stand der Technik sind beispielsweise EP-A-338 688, US-A-5 473 946 oder US-A-5 142 921 zu betrachten.

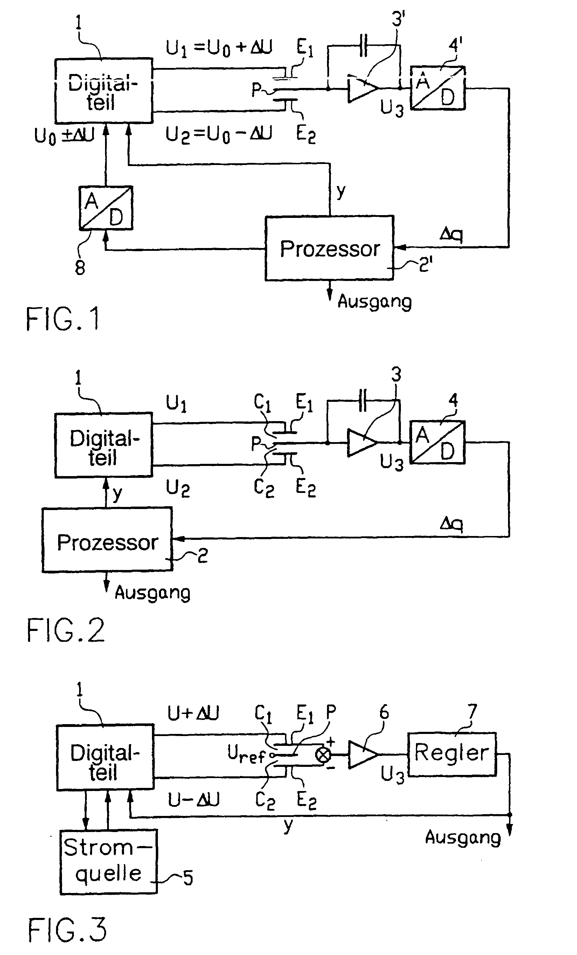

Beschleunigungsmeßeinrichtungen mit mikromechanischem Pendel in Differentialkondensatoranordnung und rückstellendem Regelkreis sind in unterschiedlichen Anordnungen bekannt oder zumindest vorgeschlagen worden. Die grundsätzliche Funktionsweise wird nachfolgend in zwei Ausführungsvarianten anhand der Fig. 2 und 3 vorgestellt werden.

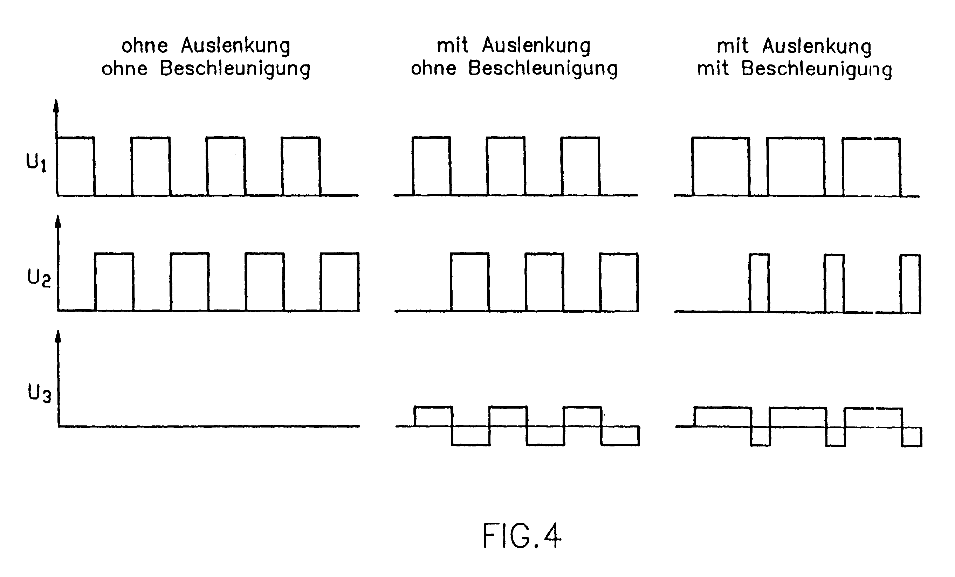

Bei der ersten Lösung gemäß Fig. 2 kommt ein Digitalrechner gekoppelt mit einem analogen Ladungsverstärker zum Einsatz. Ein Rechner 2 steuert Spannungsimpulse $U_1$, $U_2$ (vergleiche Fig. 4) abwechselnd an eine obere Elektrode $E_1$ bzw. an eine untere Elektrode $E_2$, die relativ zu einem Pendel P feststehend angeordnet sind. Bei einer Verstimmung der Anordnung fließt eine Differenzladung über das Pendel P, die verstärkt ($U_3$) und in Block 4 A/D-gewandelt wird. Der Rechner 2 linearisiert die Pendelkennlinien und kompensiert - wie das mittlere und das rechte Diagramm in Fig. 4 erkennen läßt - auf das Pendel P wirkende Beschleunigungen über das Puls-Weiten-Verhältnis der zeitsequentiellen Spannungsimpulse $U_1$ bzw. $U_2$ an der oberen bzw. unteren Elektrode $E_1$, $E_2$. Gleichzeitig stellt der Rechner 2 den Offset des Pendels P ein und kompensiert den Bias und den Skalenfaktor, insbesondere in Abhängigkeit von Temperatureinflüssen.

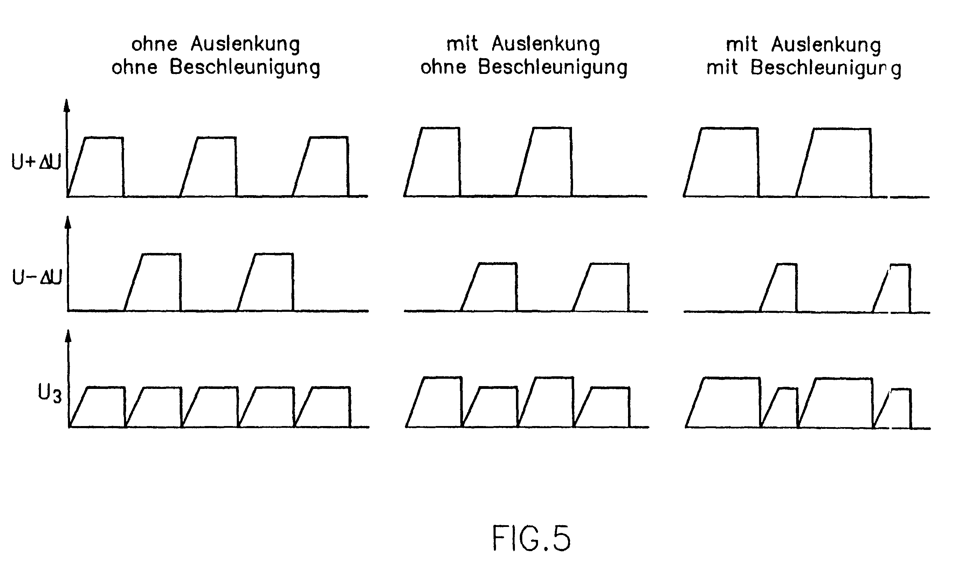

Bei der zweiten anhand von Fig. 3 in Verbindung mit den drei Zeitdiagrammen der Fig. 5 veranschaulichten Lösung kommt eine analoge Ladungsregelung mit einem Digitalteil 1 für die Puls-Weiten-Rückstellung bei Auslenkung des Pendels P zur Anwendung. Die Einzelladungen der beiden Kondensatoren $C_1$, $C_2$ werden durch eine Präzisions-Stromquelle 5 über ein konstantes kurzes Zeitintervall von beispielsweise 25 µs definiert. Dabei wird nur der über das Pendel P fließende Strom geregelt. Der Strom wird zwar über die Elektroden $E_1$, $E_2$ aufgebracht, bestimmt jedoch nicht die Regelung 6, 7. Durch die Ladungsregelung ist die wirkende Rückstellkraft pro Elektrode unabhängig von der Pendelstellung und muß nicht mehr linearisiert werden. Die auftretenden Spannungen an den Elektroden $E_1$, $E_2$ sind allerdings bei Auslenkung des Pendels P unterschiedlich. Die Ladungsdifferenz stellt den am Eingang eines Operationsverstärkers 6 liegenden Abgriff dar. Die Beschleunigung wird durch die angegebene Ladungsdifferenz angezeigt und über das Puls-Weiten-Verhältnis kompensiert. Dafür wird ein Digitaltest innerhalb eines getrennten Zeitschlitzes von beispielsweise 75 µs verwendet.

Die beiden kurz anhand der Fig. 2 und 4 bzw. 3 und 5 erläuterten bekannten Lösungsansätze für die Rückstellregelung lassen sich kurz zusammengefaßt wie folgt bewerten, wobei die weiter unten dargestellten physikalisch-mathematischen Betrachtungen nähere Erläuterungen bieten.

Die erste Lösung (Fig. 2, 4) ist weitgehend digital; der Bias und der Skalenfaktor werden intern kompensiert. Die Spannungssteuerung an den Elektroden $E_1$, $E_2$ und die Linearisierung sind auf die Stabilität des Abgriff-Nullpunkts abgestellt. Dabei sind die Anforderungen an die relative Abgriffgenauigkeit gegeben durch die mögliche und erforderliche Nullpunktgenauigkeit. Bezogen auf einen Bereich von z. B. 500 µg bis 10 g ergibt sich eine erforderliche Nullpunktgenauigkeit von $5 \times 10^{-5}$.

Entsprechende Überlegungen führen bei der zweiten bekannten Lösung (Fig. 3 und 5) zu einer relativen Abgriffgenauigkeit bzw. Nullpunktgenauigkeit von $1.7 \times 10^{-3}$ bezogen auf eine erforderliche Beschleunigung bei Vollauslenkung des Pendels von z. B. 500 µg bei 0,3 g. Durch Test konnte nachgewiesen werden, daß die Regelelektronik beim zweiten Lösungsansatz wesentlich unempfindlicher ist gegen eventuelle Nullpunktfehler. Der Nachteil dieser Lösung ist allerdings, daß der schaltungstechnische Aufwand deutlich höher ist und der gesamte Meßbereich bei gleichen Spannungen um ca. 25 % eingeschränkt ist. Außerdem ist eine interne Kompensation des Skalenfaktors nicht möglich.

Ausgangspunkt für die der Erfindung zugrundeliegende Aufgabe, nämlich für einen möglichst großen Meß- bzw. Dynamikbereich mikromechanischer Beschleunigungsmesser mit rückstellendem Regelkreis den Rückstellbias und die Skalenfaktorgenauigkeit zu verbessern, sind die nachfolgend dargestellten physikalisch-mathematischen Überlegungen.

Die Theorie der geschalteten elektrostatischen Rückstellung für mikromechanische Pendelsysteme ergibt für die mittlere Rückstellkraft F:

$$F = Q_1 E_1 \frac{\Delta t + dt}{\Delta t} \quad Q_2 E_2 \frac{\Delta t - dt}{\Delta t} \tag{1}$$

Dabei wird für kleine Winkel als angenommene lineare Auslenkung die übliche Näherung $\sin\alpha = \alpha$ vorausgesetzt und die Schaltzeiten für beide Spannungen werden gleichgesetzt. Dabei gilt:

F        mittlere wirkende Kraft

$Q_{1,2}$     Ladung an der oberen Kapazität $C_1$ bzw. der unteren Kapazität $C_2$

$E_{1,2}$     Feldstärke zwischen dem Pendel P und der oberen bzw. unteren Eleketrode $E_1$, $E_2$

$\Delta t$       Zeitdauer der Schaltimpulse

dt        Differenz der beiden Schaltimpulse an oberer bzw. unterer Kapazität $C_1$, $C_2$.

Aufgrund der Rückstellkräfte kann sich bei Asymmetrie ein zusätzlicher Nullpunktfehler ergeben, der Rückstellbias oder kurz Bias B genannt wird. Der Bias B ergibt sich aus (1) durch dt = 0 und F = m · a (m = Masse des Pendels P, a = Beschleunigung):

$$B = (Q_1 E_1 - Q_2 E_2) \frac{1}{m} \tag{2}$$

Der Skalenfaktor S für die Beschleunigung ergibt sich aus dem Anteil mit $dt \neq 0$:

$$S = (Q_1 E_1 + Q_2 E_2) \frac{dt}{\Delta t} \frac{1}{m} \tag{3}$$

Der Bereich rückgestellter Beschleunigung für positive bzw. negative Beschleunigung $R_+$ bzw. $R_-$ ergibt sich durch:

$$R_+ = \left[ Q_1 E_1 \left( \frac{\Delta t + dt_{max}}{\Delta t} \right) - Q_2 E_2 \left( \frac{\Delta t - dt_{max}}{\Delta t} \right) \right] \frac{1}{m}$$

$$R_- = \left[ Q_1 E_1 \left( \frac{\Delta t - dt_{max}}{\Delta t} \right) - Q_2 E_2 \left( \frac{\Delta t + dt_{max}}{\Delta t} \right) \right] \frac{1}{m} \tag{4}$$

Für die Vereinfachung unter der Annahme, daß $dt_{max} = \Delta t$ ist, ergibt sich:

$$R_+ = \frac{2 Q_1 E_1}{m} \quad \text{und} \quad R_- = \frac{2 Q_2 E_2}{m} \tag{5}$$

Bei dem oben als erstgenannte Lösung (Fig. 2 und 4) beschriebenen Verfahren werden die Spannungen $U_1$ und $U_2$ an den Kondensatoren $C_1$, $C_2$ geschaltet:

$$Q_1 = C_1 U_1 = \varepsilon_0 \frac{A}{d_1} U_1$$

$$Q_2 = C_2 U_2 = \varepsilon_0 \frac{A}{d_2} U_2$$

$$\text{(6)}$$

$$E_1 = \frac{U_1}{d_1}$$

$$E_2 = \frac{U_2}{d_2}$$

Dabei ist:

A      Fläche der Kondensatoren $C_1$, $C_2$; für beide Kondensatoren gleich angenommen

$\varepsilon_0$      Dielektrizitätskonstante

$d_{1,2}$      jeweilige Abstände zwischen Pendel P und Elektroden $E_1$ bzw. $E_2$

Setzt man $d_1 = d_0 + d$, $d_2 = d_0 - d$, $U_1 = U_0 + U$ und $U_2 = U_0 - U$ mit $U_0$ = mittlere Schaltspannung, so ergeben sich aus den Gleichungen (2), (3), (5) mit Gleichung (6) für $d \ll d_0$ und $U \ll U_0$ folgende Formeln:

$$B \approx \frac{4\varepsilon_0\, A U_0^2}{m d_0^2} \left( \frac{U}{U_0} - \frac{d}{d_0} \right) \qquad \text{(7a)}$$

$$S = \frac{2\varepsilon_0\, A U_0^2}{m d_0^2} \frac{dt}{\Delta t} \qquad \text{(7b)}$$

$$R = \frac{2\varepsilon_0\, A U_0^2}{m d_0^2} \qquad \text{(7c)}$$

Dabei ist in dieser Näherung $R_+ = R_- = R$, wie sich unmittelbar aus Gleichung (7b) für $dt = \Delta t$ ergibt.

Die wesentlichen Einflußgrößen für den Rückstellbias B, den Skalenfaktor S bzw. die rückgestellte Beschleunigung R sind die Spannungen $U_0$ und $U$ sowie die Abstände $d_0$ und $d$. Wie man aus Gleichung (7b) sieht, hängt der Skalenfaktor S von $(U_0/d_0)^2$ ab. Das der erstbeschriebenen Lösung zugundeliegende Verfahren hat also die Nachteile, daß der Skalenfaktor S kritisch von der Stabilität der mittleren Schaltspannung $U_0$ sowie von allen möglichen Übergangswiderständen zu den Elektroden abhängt und daß sich bei Änderungen der mittleren Abstände $d_0$ der Kondensatoren $C_1$, $C_2$, z. B. durch Temperatur- oder Druckänderungen, der Skalenfaktor S ebenfalls kritisch verändert.

Da der Rückstellbias B über den Skalenfaktor S als Zeitveränderung dt gemessen wird, hebt sich - wie sich aus Gleichung (7a) ersehen läßt - dort die Abhängigkeit von $(U_0/d_0)^2$ heraus. Gleichwohl hängt der Rückstellbias B linear von $U/U_0$ und $d/d_0$ ab. Die Anforderungen an deren Stabilität wachsen mit dem rückgestellten Beschleunigungsbereich, da aus Gleichung (7a) mit Gleichung (7c) folgt:

$$B \approx 2R \left( \frac{U}{U_0} - \frac{d}{d_0} \right) \qquad \text{(8)}$$

Damit ist die erstbeschriebene Lösung mit dem Nachteil behaftet, daß z. B. für einen rückstellbaren Beschleunigungsbereich von 80 g und einer Rückstellbiasstabilität von 500 μg, die die Abhängigkeiten des Skalenfaktors S und des Rückstellbias B bestimmenden Größen auf $6 \times 10^{-6}$ stabil gehalten werden müssen. Dies ist besonders schwierig für die Größe $d/d_0$, da für realistische Dicken mikromechanischer Pendel und bei Beschränkung der Rückstellspannung der Abstand $d_0 < 3 \times 10^{-6}$ m eingehalten werden muß, so daß für die Auslenkung d eine Genauigkeitsanforderung von $d << 1,8 \times 10^{-11}$ m bestehen würde.

Die Grundidee für die zweitbeschriebene bekannte Lösung (Fig. 3 und 5) beruht darauf, daß durch eine Konstantstromquelle 5 über ein fest vorgegebenes Zeitfenster $\Delta t_i$ jeweils eine konstante Ladung Q auf die beiden Kondensatoren $C_1$, $C_2$ zwischen dem Pendel P und den Elektroden $E_1$, $E_2$ aufgebracht wird. Durch diese Maßnahme soll erreicht werden, daß gilt:

$$Q_1 = Q_2 = Q \qquad\qquad (9a)$$

Außerdem gilt für die Kondensatoren $C_1$, $C_2$:

$$Q = \varepsilon_0 \frac{A}{d_1} U_1 = \varepsilon_0 \frac{A}{d_2} U_2 \qquad\qquad (9b)$$

Daraus folgt:

$$E_1 = \frac{U_1}{d_1} = \frac{U_2}{d_2} = E_2 = E \qquad\qquad (10)$$

Somit ergibt sich für den Rückstellbias B mit Gleichung (2):

$$B = (Q \cdot E - Q \cdot E)\frac{1}{m} \equiv 0 \qquad\qquad (11a)$$

$$S = 2Q \cdot E\frac{dt}{\Delta t} \frac{1}{m} \qquad\qquad (11b)$$

Für den zweiten Lösungsvorschlag ergibt sich also der Vorteil, daß der Rückstellbias B verschwindet und der Skalenfaktor S nicht von der Auslenkung d abhängt, so daß keine Linearisierung notwendig ist. Die Genauigkeit des Skalenfaktors S entspricht der Güte der Stromregelung und der Zeitsteuerung der Stromaufladung.

Führt man weiterhin

$$U_1 = U_0 + \Delta U$$

$$U_2 = U_0 - \Delta U$$

ein, so gilt Gleichung (10) für alle $\Delta U$ und somit auch für $\Delta U = 0$, woraus folgt:

$$E = \frac{U_1}{d_1} = \frac{U_2}{d_2} = \frac{U_0}{d_0} \qquad\qquad (12)$$

Daraus folgt dann z. B.:

$$\frac{d_1 - d_0}{d_0} = \frac{U_1 - U_0}{U_0} = \frac{\Delta U}{U_0} \qquad\qquad (13)$$

Die Spannungsdifferenz $\Delta$U stellt somit ein Maß für die Auslenkung des Pendels P dar, die aufgrund äußerer Beschleunigung erfolgt. Diese Spannungsdifferenz $\Delta$U beeinflußt in dem dargestellten Regelkreis die Zeitdifferenz dt der Schaltpulse derart, daß das Pendel P gegenüber dem Elektroden $E_1$, $E_2$ bei $d_0$ gehalten und die Beschleunigung kompensiert wird. Durch die Art der Ladungsregelung ist die Rückstellkraft damit unabhängig von der Auslenkung und konstant, so daß sonst notwendige Linearisierungen der Rückstellkraft entfallen.

Das zweitbeschriebene Verfahren (Fig. 2 und 4) hat jedoch aber auch zwei erhebliche Nachteile:

- Für das Aufbringen der Ladungen Q = i · $\Delta t_i$ wird ca. 25 % des Rückstellzyklus benötigt, so daß die maximale Durchsteuerzeit $dt_{max}$ reduziert wird und damit der Bereich der rückgestellten Beschleunigung gemäß Gleichung (4) eingeschränkt wird.

- Der weitere Nachteil besteht darin, daß der Strom i nur in die tatsächlichen Arbeitskapazitäten $C_1$, $C_2$ zwischen dem Pendel P und den Elektroden $E_1$, $E_2$ fließen darf. Mikromechanische Beschleunigungsmesser haben allerdings meist wesentlich größere Streukapazitäten als Arbeitskapazitäten, so daß sich in der Praxis aus dieser Forderung erhebliche Schwierigkeiten ergeben.

Die Erfindung besteht bei einer Beschleunigungsmeßeinrichtung mit mikromechanischem Pendel, kapazitivem Abgriff und einem durch elektrostatische Kräfte rückstellenden Regelkreis gemäß dem Oberbegriff des Patentanspruchs darin, daß der Regelkreis die elektrostatischen Rückstellkräfte auf das Pendel über zwei Komponenten beeinflußt, nämlich

- zum einen dadurch, daß die Spannungspegel der die beiden Elektroden $E_1$, $E_2$ zeitsequentiell beaufschlagenden Impulse so eingestellt werden. daß keine Differenzladung fließt und damit auf beide Seiten des Pendels P die gleiche Kraft wirkt und

- zum anderen dadurch, daß bei auftretender Beschleunigung aufgrund der Differenzspannung beider Elektroden $E_1$, $E_2$ die Zeitdauern der jeweils anliegenden Spannungsimpulse entsprechend der Beschleunigung verändert werden, wobei die Differenz der Zeitdauern der zu messenden Beschleunigung entspricht.

Eine prizipielle Ausführungsform der Erfindung wird nachfolgend anhand der Zeichnungen beschrieben. Es zeigen:

**Fig. 1** eine grundsätzliche Schaltungsausführung für eine Beschleunigungsmeßeinrichtung mit mikromechanischem Pendel gemäß der Erfindung;

**Fig. 2** die bereits oben erläuterte bekannte erste Ausführungsvariante eines weitgehend digitalen Regelkreises für eine mikromechanische Beschleunigungsmeßeinrichtung mit Rückstellung über Puls-Weiten-Änderung von zwei Spannungsimpulsen;

**Fig. 3** die ebenfalls bereits erläuterte zweite bekannte Ausführungsvariante einer Regelanordnung für eine mikromechanische Beschleunigungsmeßeinrichtung mit Ladungsregelung;

**Fig. 4** drei Signaldiagramme zur Erläuterung der erstbenannten bekannten Ausführungsvariante, die verdeutlichen, wie die rückstellende Regelschaltung bei Auslenkung des Pendels P mit Beschleunigung durch Änderung des Puls-Weiten-Verhältnisses der Spannungen $U_1$, $U_2$ reagiert;

**Fig. 5** der Fig. 4 ensprechende Signaldiagramme für die Ladungsregelung gemäß der zweiten bekannten und oben beschriebenen Ausführungsvariante bei gleichzeitiger Puls-Weiten-Änderung, sofern eine Auslenkung des Pendels P mit Beschleunigung vorliegt;

**Fig. 6** den Fig. 4 und 5 entsprechende Zeitdiagramme bei unterschiedlichen Betriebszuständen für den Fall der erfindungsgemäßen Schaltungsausführung nach Fig. 1; und

**Fig. 7** wiederum entsprechende Signal-Diagramme für die in der erfindungsgemäßen Schaltungsausführung nach Fig. 1 angegebenen Spannungen bei drei unterschiedlichen Betriebszuständen.

Mit der Erfindung, deren prinzipielle Schaltungsanordnung in Fig. 1 dargestellt ist. werden die oben dem Stand der Technik anhaftenden Nachteile dadurch überwunden, daß die Differenzladung in den Kondensatoren $C_1$, $C_2$ (also

$Q_1 - Q_2$) geregelt wird: Der eingangsseitig mit dem Pendel P verbundene Ladungsverstärker 3' zeigt die Differenzladung ($Q_1 - Q_2$) an und der der Differenzladung $\Delta Q$ entsprechende Spanungswert $U_3$ beaufschlagt, nach Analog/Digital-Wandlung in 4', den Eingang des digitalen Reglers (Prozessors) 2', der die Schaltspannungen nach Analog/Digital-Wandlung in 8 der Kondensatoren $C_1$, $C_2$ derart ändert, daß $Q_1 = Q_2$ gilt. Ebenso wie bei der oben erläuterten zweiten bekannten Lösung gilt dann auch, daß der Rückstellbias B zu 0 wird (vergleiche Gleichung (11a)). Wichtig ist, daß dies unabhängig von Streukapazitäten am mikromechanischen Beschleunigungsmesser gilt, da diese die Differenzladung nicht beeinflußt. Somit ist der Rückstellbereich - anders als bei der oben beschriebenen zweitgenannten Lösung - nicht eingeschränkt. Eine Linearisierung der Rückstellkraft entfällt, so daß man einen wesentlichen Vorteil der zweiten bekannten Lösungsvariante beibehält, aber deren Nachteil des eingeschränkten Rückstellbereichs vermeidet.

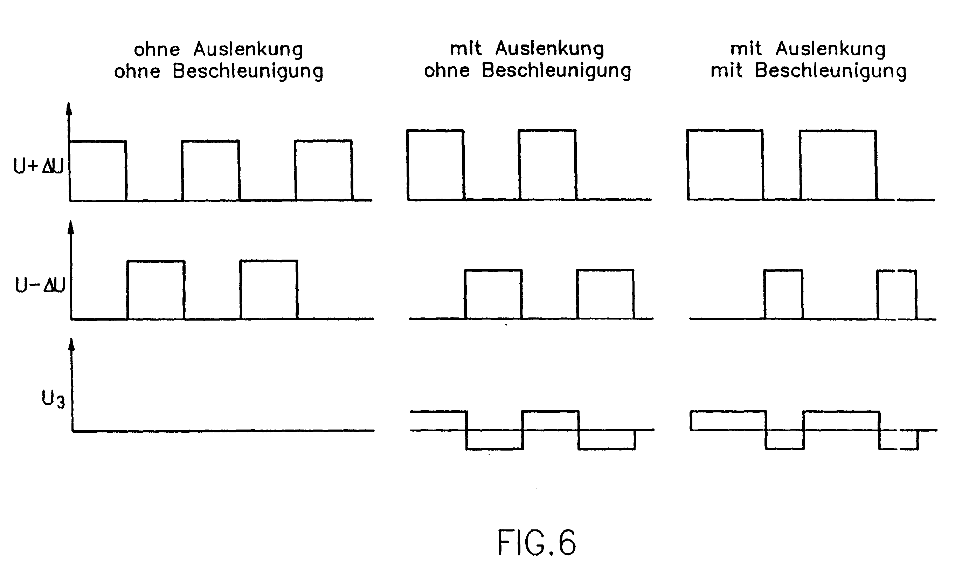

Die Realisierung dieser Idee ist im Blockschaltbild der Fig. 1 dargestellt. Der mikromechanische Beschleunigungssensor ist wiederum als Doppelkondensator dargestellt und wird abwechselnd mit $U_1 = U_0 + \Delta U$ bzw. $U_2 = U_0 - \Delta U$ beaufschlagt, wie im Zeitdiagramm der Fig. 6 (links) dargestellt. Die Differenzladung $\Delta U = U_3$ wird durch den Ladungsverstärker 3' angezeigt und dann in 4' A/D-gewandelt. Der Prozessor 2' schließt dann beide Regelschleifen. Erstens regelt er $\Delta U$ aus $U_{1,2} = U_0 \pm \Delta U$ so, daß $U_3$ minimal wird. Zweitens regelt er über das Tastverhältnis y die Schaltzeiten so, daß $\Delta U$ minimal wird. Von den drei Zeitdiagrammen der Fig. 6 zeigt das erste, daß ohne Auslenkung kein Signal $U_3$ vorhanden ist. Das mittlere Diagramm zeigt den Fall, daß nur die erste Komponente bzw. der erste Regelkreis wirksam ist bei unwirksamer zweiter Komponente oder offenern zweiten Regelkreis. Ersichtlicherweise entsteht aufgrund der Auslenkung das Wechselsignal $U_3$, dessen Amplitude bei gleichem Tast- oder Taktverhältnis zum Minimum geregelt wird. Das dritte Diagramm zeigt die Signale, wenn beide Komponenten oder beide Regelkreise gleichzeitig in Betrieb sind. Durch die Spannung $\Delta U$ wird der Zeittakt oder das Tastverhältnis so geregelt, daß $\Delta U$ minimal wird. Das Tastverhältnis y ist proportional zur messenden Beschleunigung und wird ausgegeben.

Um das Prinzip zu verdeutlichen, sind in den drei Diagrammen der Fig. 6 sowohl $\Delta U$ als auch $U_3$ überhöht dargestellt. Im Idealfall treten diese Signale nur vorübergehend auf und werden möglichst zu $\Delta U = 0$ und $U_3 = 0$ geregelt.

Dadurch, daß bei der erfindungsgemäßen Lösung durch die erste Komponente des Regelkreises (dem ersten Regelkreis) nur die Differenzladung ($Q_1 - Q_2$) geregelt wird - im Gegensatz zur Regelung der Einzelladungen $Q_1$ und $Q_2$ bei der bekannten Lösung nach Fig. 3 - ergibt sich zunächst aufgrund von Gleichung (11b), daß der Skalenfaktor S nicht geregelt wird, da der Faktor 2Q im wesentlichen die Summe ($Q_1 + Q_2$) darstellt.

Dieses Problem kann nun mit dem zweiten Teil des Regelkreises bzw. der zweiten Komponente des Regelkreises dadurch beseitigt werden, daß das Schaltmuster für die Ladespannungen derart verändert wird, daß der Ladungsverstärker 3' meistens mit der Differenzladung durch Gegentaktschalten von $U_1$ und $U_2$, gelegentlich aber durch Gleichtaktschalten von $U_1$ und $U_2$ mit der Summenladung beaufschlagt wird. Aufgrund der Messung der Summenladung läßt sich dann auch der Skalenfaktor rechnerisch kompensieren oder regeln, indem $U_0$ aus $U_{1,2} = U_0 + \Delta U$ so geregelt wird, daß die bei Gleichtakt gemessene Summenladung einen konstanten Wert hat. Dies bedeutet in diesem Fall, daß der Zeitablauf der Spannungsschaltung so verstärkt ist, daß mit der Spannung $U_3$ sowohl die Ladungsdifferenz ($Q_1 - Q_2$) beim Gegentaktschalten der Spannungen $U + \Delta U$ und $U - \Delta U$ als auch die Ladungssumme $Q_1 + Q_2$ beim Gleichtaktschalten der Spannungen erfaßt wird.

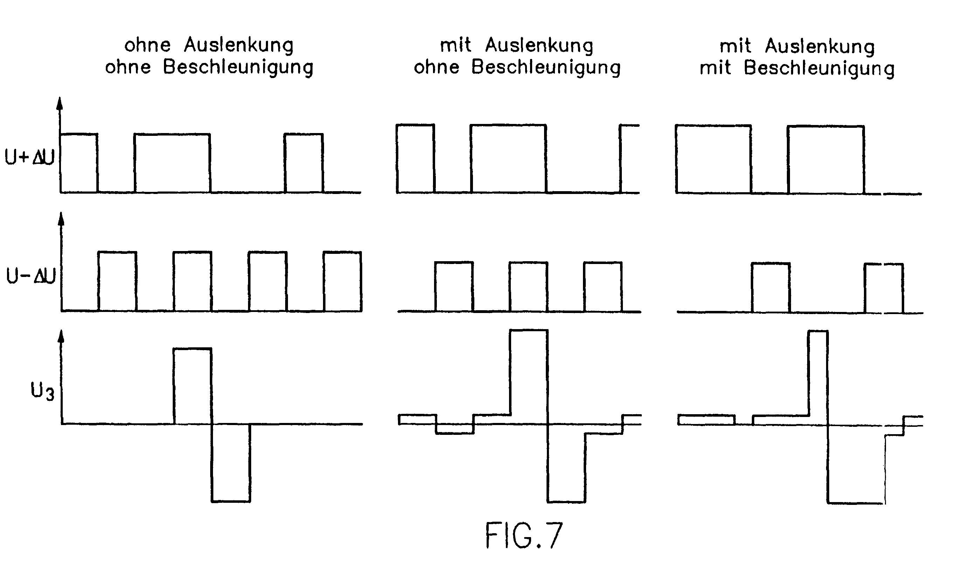

Die Diagramme der Fig. 7 zeigen ein der Fig. 6 ähnliches Schaltmuster von drei Diagrammen, bei dem jedoch zusätzlich die Erfassung der Ladungssummen vorgesehen ist, über die der Skalenfaktor geregelt werden kann. Ersichtlich ist zunächst, daß die erste Komponente des Regelkreises oder kurz der erste Regelkreis die Spannung $\Delta U$ so einstellt, daß ($Q_1 - Q_2$) = 0 gilt. $\Delta U$ steuert in der zweiten Komponente des Regelkreises oder kurz im zweiten Regelkreis das Tastverhältnis y so, daß $\Delta U = 0$ wird. Dabei stellt y die Meßgröße "Beschleunigung" dar, die mit hoher Taktrate gemessen werden soll. Dies bedeutet, daß die Differenzladung ($Q_1 - Q_2$) häufig abgetastet wird, wobei der Skalenfaktor S zunächst ungeregelt bleibt. Der Skalenfaktor ändert sich jedoch in aller Regel nur langsam, z. B. durch Temperaturänderungen. Deshalb benötigt man die Summenladung ($Q_1 + Q_2$) nur selten. Dies bedeutet, daß der Skalenfaktor rein rechnerisch zwischen dem Signal y und dem Ausgang berücksichtigt oder über den zweiten Regelkreis auf konstantem Wert geregelt wird.

Aufgrund der Erfindung läßt sich der große Dynamikbereich der oben anhand der Fig. 2 in Verbindung mit Fig. 4 beschriebenen bekannten Beschleunigungsmeßeinrichtung beibehalten mit dem Vorteil eines stabilen Bias und einer zusätzlichen einfachen Skalenfaktorregelung.

**Patentansprüche**

1.  Beschleunigungseinrichtung mit mikromechanischem Pendel, kapazitivem Abgriff und einem durch elektrostatische Kräfte rückstellenden Regelkreis, der in sequentieller Zeitfolge eine rückstellende Spannung ($U_1$, $U_2$) zwischen dem Pendel (P) und einer ersten bzw. einer zweiten Elektrode ($E_1$, $E_2$) anlegt, die relativ zum Pendel (P) feststehen und die in einem jeweils festgelegten Abstand ($d_0$) auf gegenüberliegende Flächen des Pendels ausgerichtet angeordnet sind, **dadurch gekennzeichnet, daß** der Regelkreis derart ausgebildet ist, daß als Stellgröße die über das Pendel (P) fließende Differenzladung ($Q_1$ - $Q_2$) erfaßt und die elektrostatischen Rückstellkräfte auf das Pendel über zwei Komponenten beeinflußt werden, nämlich

- zum einen dadurch, daß die Spannungspegel der die beiden Elektroden ($E_1$, $E_2$) zeitsequentiell beaufschlagenden Impulse so eingestellt werden, daß keine Differenzladung fließt und damit auf beide Seiten des Pendels (P) die gleiche Kraft wirkt, und
- zum anderen dadurch, daß bei auftretender Beschleunigung aufgrund der Differenzspannung beider Elektroden die Zeitdauern der jeweils anliegenden Spannungsimpulse ensprechend der Beschleunigung verändert werden, wobei die Differenz der Zeitdauern der zu messenden Beschleunigung entspricht.

2. Beschleunigungsmeßeinrichtung nach Anspruch 1, **dadurch gekennzeichnet, daß** der Regelkreis derart ausgebildet ist, daß zur Regelung des Skalenfaktors in festlegbaren Zeitschlitzen die über das Pendel fließende Summenladung (Q1 + Q2) erfaßt wird.

## Claims

1. An accelerometer having a micromechanical pendulum, capacitive tap and a control loop which is reset by electrostatic forces and, in a sequential time sequence, applies a resetting voltage ($U_1$, $U_2$) between the pendulum (P) and a first or a second electrode ($E_1$, $E_2$), which are fixed relative to the pendulum (P) and are arranged so as to be aligned at a respectively defined distance ($d_0$) to opposite surfaces of the pendulum, **characterized in that** the control loop is designed so that it detects the differential charge ($Q_1$-$Q_2$) flowing via the pendulum (P) as a control variable, and the electrostatic resetting forces on the pendulum are influenced via two components, namely:

- firstly **in that** the voltage levels of the pulses which act sequentially in time on the two electrodes ($E_1$, $E_2$) are set such that no differential charge flows and the same force thus acts on both sides of the pendulum (P), and
- secondly **in that**, when an acceleration occurs, the voltage difference between the two electrodes varies the time durations of the respectively applied voltage pulses in a corresponding manner to the acceleration, with the difference between the time durations corresponding to the acceleration to be meausred.

2. The accelarometer as claimed in claim 1, **characterized in that** the control loops is designed so that the total charge ($Q_1$+$Q_2$) flowing via the pendulum is detected in time slots which can be defined, in order to control the scale factor.

## Revendications

1. Accéléromètre comportant un pendule micromécanique, un capteur capacitif et une boucle d'asservissement de remise à l'état initial grâce à des forces électrostatiques et qui applique dans une chronologie séquentielle une tension de remise à l'état initial ($U_1$, $U_2$) entre le pendule (P) et une première ou une seconde électrode ($E_1$, $E_2$) qui sont fixes par rapport au pendule (P) et qui sont alignées, à une distance fixe ($d_0$), sur les surfaces opposées du pendule, **caractérisé en ce que** la boucle d'asservissement (1) est conçue de telle sorte qu'elle détecte comme grandeur de commande la charge différentielle ($Q_1$-$Q_2$) qui passe dans le pendule (P), et les forces électrostatiques de remise à l'état initial exercées sur le pendule sont influencées grâce à deux composants :

- d'une part grâce au fait que les niveaux de tension des impulsions qui sollicitent les deux électrodes ($E_1$, $E_2$) de manière séquentielle sont réglés pour qu'aucune charge différentielle ne s'écoule et pour que la même force agisse ainsi sur les deux côtés du pendule (P),
- et d'autre part grâce au fait que lors d'une accélération, les durées des impulsions de tension présentes sont modifiées en fonction de l'accélération, grâce à la tension différentielle des deux électrodes, la différence de ces durées correspondant à l'accélération à mesurer.

2. Accéléromètre selon la revendication 1, **caractérisé en ce que** la boucle d'asservissement est conçue pour que la charge totale ($Q_1$+$Q_2$) qui passe par le pendule soit détectée, en vue de la régulation du facteur de cadrage dans des laps de temps aptes à être définis.

EP 1 145 015 B1

FIG.1

FIG.2

FIG.3

9

ohne Auslenkung
ohne Beschleunigung

mit Auslenkung
ohne Beschleunigung

mit Auslenkung
mit Beschleunigung

$U_1$

$U_2$

$U_3$

FIG.4

EP 1 145 015 B1

EP 1 145 015 B1

ohne Auslenkung
ohne Beschleunigung

mit Auslenkung
ohne Beschleunigung

mit Auslenkung
mit Beschleunigung

$U+\Delta U$

$U-\Delta U$

$U_3$

FIG.5

ohne Auslenkung
ohne Beschleunigung

mit Auslenkung
ohne Beschleunigung

mit Auslenkung
mit Beschleunigung

$U+\Delta U$

$U-\Delta U$

$U_3$

FIG.6

ohne Auslenkung
ohne Beschleunigung

mit Auslenkung
ohne Beschleunigung

mit Auslenkung
mit Beschleunigung

$U+\Delta U$

$U-\Delta U$

$U_3$

FIG.7